# EUROPÄISCHE PATENTSCHRIFT

(11) **EP 1 640 311 B1**
(45) Veröffentlichungstag und Bekanntmachung des Hinweises auf die Patenterteilung: **02.07.2008**
(21) Anmeldenummer: 05020319.9
(22) Anmeldetag: 17.09.2005
(51) Int. Cl.: B66F 9/075, B62D 6/00

(54) **Verfahren zur Kippvermeidung von hinterradgelenkten Fahrzeugen, insbesondere Flurförderzeugen**
Method for preventing tipping over of rear wheel steered vehicles, in particular of industrial trucks
Méthode pour prévenir le renversement de véhicules dirigés par la roue arrière, en particulier de véhicules industriels

(30) Priorität: 28.09.2004 DE 102004046890
(43) Veröffentlichungstag der Anmeldung: 29.03.2006
(73) Patentinhaber: Jungheinrich Aktiengesellschaft, 22047 Hamburg (DE)
(72) Erfinder: Mänken, Frank, Dr.-Ing., 24558 Henstedt-Ulzburg (DE); Schröder, Henrik, Dipl.-Ing., 21423 Winsen-Roydorf (DE); Wesemeier, Daniel, cand.-Ing., 62289 Darmstadt (DE)
(74) Vertreter: Hauck Patent- und Rechtsanwälte

(56) Entgegenhaltungen:
- EP-A2- 1 225 109
- DE-A1- 4 031 304
- DE-A1- 10 008 984
- DE-A1- 19 515 053
- DE-A1- 19 712 827
- DE-A1- 19 918 597

## Beschreibung

Die Erfindung bezieht sich auf ein Verfahren zur Kippvermeidung von hinterradgelenkten Fahrzeugen, insbesondere Flurförderzeugen nach dem Oberbegriff des Patentanspruchs 1.

Das seitliche Umkippen von Fahrzeugen bei Kurvenfahrt hängt von der Seitenführungskraft ab, die durch die Räder des Fahrzeugs aufgebracht wird. Um ein seitliches Kippen zu verhindern, muss deshalb die Seitenführungskraft geeignet reduziert werden. Bekannte Systeme zur Erhöhung der Kippstabilität nutzen dafür folgende Effekte:
Reduzierung der Reifen- Seitenführungskraft durch Reduzierung der Fahrzeuggeschwindigkeit
Reduzierung der Reifen- Seitenführungskraft durch Blockieren des Rades
Reduzierung der Reifen- Seitenführungskraft durch Eingriff in den Lenkwinkel des Fahrzeugs.

Die vorliegende Erfindung befasst sich mit einem Verfahren zur Erhöhung der seitlichen Kippsicherheit bei Kurvenfahrt von hinterradgelenkten Fahrzeugen durch einen Eingriff in den Lenkwinkel.

Aus DE 100 08 984 A1 ist bekannt geworden, für Flurförderzeuge die Lenkbewegung von der Masse und/oder der Hubhöhe einer von dem Flurförderzeug aufgenommen Last abhängig zu machen. Hierbei handelt es sich um ein gesteuertes Verfahren ohne Nutzung von fahrdynamischen Größen des Fahrzeugs. Ein automatischer Eingriff in den Lenkwinkel ist nicht vorgesehen.

Aus DE 199 18 597 C2 ist bekannt geworden, einen automatischen Lenkeingriff nach Bestimmung eines sogenannten Kippkoeffizienten durchzuführen. Ein Lenkeingriff nach diesem Verfahren ist jedoch nur für Fahrzeuge mit Vorderradlenkung sinnvoll. Die Besonderheiten von hinterradgelenkten Fahrzeugen werden nicht berücksichtigt. Außerdem werden mehrere zusätzliche Sensoren am Fahrzeug benötigt.

Aus DE 195 15 053 A1 ist bekannt, für Vorder- und Hinterräder Schräglaufwinkel zu ermitteln und als Regelgröße eine Schräglaufwinkeldifferenz zu bilden. Die Schräglaufwinkel an Vorder- und Hinterrädern werden durch den Schwimmwinkel und die Gierrate ermittelt. Mit Hilfe des bekannten Verfahrens kann ein Über- oder Untersteuern des Fahrzeugs beeinflusst werden. Eine Verbesserung der dynamischen Kippsicherheit bei hinterradgelenkten Fahrzeugen ist mit dem bekannten Verfahren hingegen nicht möglich.

Der Erfindung liegt die Aufgabe zugrunde, ein Verfahren zur Kippvermeidung von hinterradgelenkten Fahrzeugen anzugeben, das dem fahrdynamischen Verhalten eines solchen Fahrzeugs bei Kurvenfahrten ausreichend Rechnung trägt.

Diese Aufgabe wird durch die Merkmale des Patentanspruchs 1 gelöst.

Beim erfindungsgemäßen Verfahren werden nur die ermittelten Schräglaufwinkel an den gelenkten Hinterrädern des Fahrzeugs mit einem zulässigen Höchstwert verglichen, der bei der jeweiligen Fahrsituation noch ausreichend Kippstabilität gewährleistet. Bei Überschreiten des Höchstwertes wird der Lenkwinkel so weit korrigiert, bis der Schräglaufwinkel unterhalb des Höchstwertes liegt. Es handelt sich mithin um einen regelnden Eingriff, der das Durchfahren einer Kurve mit maximaler Geschwindigkeit erlaubt bei gleichzeitiger ständiger Berücksichtigung der Kippstabilitätsgrenze. Mit anderen Worten, die Erfindung begrenzt den Schräglaufwinkel der gelenkten Hinterräder situationsabhängig auf vorgegebene Werte. Dem vom Fahrer vorgegebenen Lenkwinkel wird ein zusätzlicher Lenkwinkel überlagert, der ausgeregelt wird, bis der Schräglaufwinkel unterhalb des zulässigen Höchstwertes liegt.

Der Vorteil des erfindungsgemäßen Verfahrens liegt darin, dass ein Umkippen vermieden wird, wobei die eingesetzten Mittel minimal sind. Vorzugsweise erfolgt die Bestimmung des jeweiligen Schräglaufwinkels durch Messung der Fahrgeschwindigkeit, des Lenkwinkels und der Gierrate. Die Fahrzeuggeschwindigkeit und auch der Lenkwinkel werden ohnehin üblicherweise gemessen. Eine Lenkwinkelmessung erfolgt insbesondere, wenn eine elektrische oder elektrohydraulische Lenkung vorgesehen ist. Die Gierrate kann mit Hilfe eines relativ einfachen Sensors am Fahrzeug bestimmt werden.

In Ausgestaltung der Erfindung wird in einer Beobachtersoftware eine Schätzung des Schwimmwinkels aus den gemessenen fahrdynamischen Größen durchgeführt. Die Schätzung ist normalerweise genau genug, um daraus zusammen mit der Gierrate den Schräglaufwinkel zu bestimmen. Für die Schätzung werden weitere Fahrzeugdaten herangezogen, insbesondere die Lage des Fahrzeugschwerpunkts. Die Erstellung der Software erfordert zwar zunächst einen gewissen Aufwand, bei dem Einsatz im Flurförderzeug ist jedoch die erforderliche Hardware zur Durchführung des Verfahrens minimal, da gegenüber herkömmlich ausgestatteten Fahrzeugen lediglich zusätzlich ein Giersensor erforderlich wird. Es versteht sich, dass das Fahrzeug Mittel vorsehen muss, um einen Lenkeingriff zu ermöglichen. Dies ist jedoch insbesondere bei Steer-by-Wire-Lenkung oder einer mechanischen Überlagerungslenkung, wie Sie üblicherweise vorgesehen sind, normalerweise der Fall.

Es kann gleichwohl geschehen, dass der geschätzte Schwimmwinkel vom tatsächlichen signifikant abweicht. Eine solche Abweichung kann dadurch festgestellt werden, dass die Gierrate, welche aus der Schätzung des Schwimmwinkels resultiert, mit der tatsächlich gemessenen Gierrate verglichen wird. Ist die Abweichung zwischen den Gierraten zu groß, kann vorgesehen werden, eine Lenkkorrektur zu unterlassen. Alternativ kann auch daran gedacht sein, den geschätzten Schwimmwinkel entsprechend zu korrigieren.

Statt einer Schätzung des Schwimmwinkels in der oben beschriebenen Art und Weise, kann nach einer Ausgestaltung der Erfindung auch vorgesehen werden , den Schwimmwinkel messtechnisch zu erfassen, vorzugsweise mit Hilfe optischer Sensoren. Derartige Sensoren sind ansich bekannt, zur Zeit jedoch relativ aufwendig.

Um das Ziel Kippstabilität zu erreichen, kann nach einer weiteren Ausgestaltung der Erfindung vorgesehen sein, zusätzlich die Fahrzeuggeschwindigkeit zu reduzieren, wenn der aktuelle Schräglaufwinkel oberhalb des zulässigen Wertes liegt.

Es versteht sich, dass der zulässige Höchstwert für einen Schräglaufwinkel nicht nur von dem Fahrzeug allein bzw. seinen Abmessungen und seiner Massenverteilung abhängen, sondern auch von der Masse der aufgenommenen Last sowie deren Höhe. Daher kann nach einer Ausgestaltung der Erfindung zur Bestimmung des maximal zulässigen Schräglaufwinkels die Lage des Fahrzeugschwerpunkts und/oder die Fahrzeugmasse bestimmt werden. Zur Bestimmung von Masse und Schwerpunktslage kann nach einer weiteren Ausgestaltung der Erfindung eine Messung der Aufstandskräfte der Reifen vorgenommen werden oder auch des Einfederweges der Reifen oder der Radaufhängung. Die Lasthöhe lässt sich ebenfalls auf einfache Weise messen.

Bei niedrigen Fahrgeschwindigkeiten kann die erfindungsgemäße Schräglaufwinkelbegrenzung abgeschaltet sein, insbesondere wenn die Bestimmung des Schwimmwinkels mit Hilfe einer Beobachtersoftware mit geringer werdender Fahrgeschwindigkeit ungenauer wird.

Flurförderzeuge sind zumeist in der Lage, bei Rückwärtsfahrt mit gleichhoher Geschwindigkeit wie bei Vorwärtsfahrt zu fahren. Erfindungsgemäß kann auch bei der Rückwärtsfahrt eines solchen Fahrzeugs eine Schräglaufwinkelbegrenzung in der beanspruchten Art und Weise durchgeführt werden. Die Kippstabilität eines Fahrzeugs kann auch durch Wankbewegungen bei Geradeausfahrt gefährdet sein. Die Erfindung bezieht sich jedoch auf die Beherrschung der Kippstabilität bei Kurvenfahrt. Bei Kurvenfahrt ist das dynamische Fahrverhalten eines Fahrzeugs beim Einlenken in die Kurve ein anderes als beim Herauslenken. Beim Einlenken eines hinterradgelenkten Fahrzeugs in eine Kurve tritt an den Hinterrädern zunächst ein dem stationären Wert entgegengerichteter Schräglaufwinkel auf. Daher sieht eine Ausgestaltung der Erfindung vor, dass der Lenkwinkel beim Einlenken in eine Kurve gesteuert wird derart, dass ein im aktuellen Fahrzustand (Geschwindigkeit, Masse, Lage des Schwerpunkts, Lenkwinkel) zu erwartender Schräglaufwinkel nicht größer ist als ein zulässiger Höchstwert und beim Herauslenken aus einer Kurve geregelt begrenzt wird. Eine Regelung beim Einlenken in eine Kurve würde wegen des Schräglaufwinkels mit negativem Vorzeichen instabil werden. Vorzugsweise ist der Schräglaufwinkel beim Einlenken in eine Kurve auf einen kleineren Wert begrenzt als beim Herauslenken. Wäre dies nicht der Fall, würde ein Fahrzeug mit konstanter Geschwindigkeit zwar in eine Kurve hineinfahren und sich durch den erfindungsgemäßen Lenkeingriff auf einem stationären Kurvenradius stabilisieren lassen. Das Fahrzeug würde jedoch nicht wieder in Geradeausfahrt gelenkt werden können, weil bei hinterradgelenkten Fahrzeugen zum Abbau der Gierbewegung eine der Zentripetalkraft gleichgerichtete Seitenführungskraft an den gelenkten Rädern notwendig ist. Diese zusätzliche Seitenführungskraft ist nur durch einen betragsmäßigen Anstieg des Schräglaufwinkels realisierbar. Um das Fahrzeug in einem solchen Fall wieder geradeaus lenken zu können, muss der zulässige Schräglaufwinkel an den Hinterrädern beim Herauslenken betragsmäßig höher als der zulässige Schräglaufwinkel beim Einlenken in die Kurve sein.

Der zulässige Höchstwert beim Herauslenken aus der Kurve muss naturgemäß unterhalb eines Wertes liegen, der die Kippstabilität gefährden könnte.

Da beim Einlenken eines hinterradgelenkten Fahrzeugs in eine Kurve an den Hinterrädern zunächst ein dem stationären Wert entgegengerichteter Schräglaufwinkel auftritt, ist es vorteilhaft, den Schräglaufwinkel nicht regelungstechnisch auf einen Maximalwert zu begrenzen, wie das erfindungsgemäße Verfahren es sonst vorsieht, weil das Gesamtsystem instabil werden kann. Vielmehr wird nach der erwähnten Ausgestaltung der Erfindung ein Lenkeingriff derart vorgenommen, dass der aufgrund eines mathematischen Fahrzeügmodells im aktuellen Fahrzustand zu erwartende stationäre Schräglaufwinkel nicht größer als ein vorgegebener kleinerer Maximalwert wird. Beim Einlenken in eine Kurve erfolgt mithin nach dieser Methode eine gesteuerter Lenkeingriff.

Mit dem erfindungsgemäßen Verfahren findet nicht nur eine Kippvermeidung statt, vielmehr hat es auch den Vorteil, dass der aus scharfen Lenkmanövern resultierende Reifenverschleiß reduziert wird. Dies ist insbesondere bei Fahrzeugen mit sehr direkten Lenksystemen (Joystick-Lenkung) der Fall.

Die Erfindung soll nachfolgend anhand von Zeichnungen näher erläutert werden.
- Fig. 1: zeigt äußerst schematisch ein Regelschema für das erfindungsgemäße Verfahren.
- Fig. 2: zeigt einen Programmablaufplan für das erfindungsgemäße Verfahren.
- Fig. 3: zeigt zwei Diagramme für Lenk- und Schräglaufwinkel bei einer Kurvenfahrt..

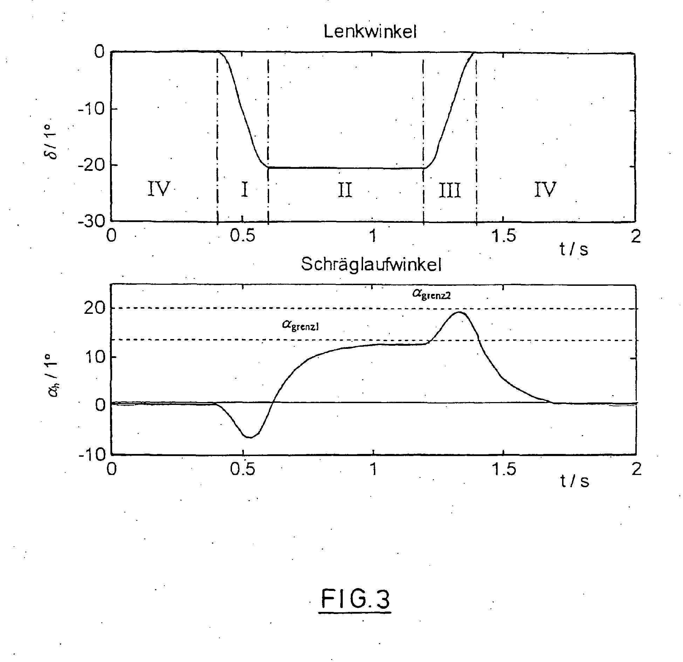

Das obere Diagramm von Fig. 3 zeigt ein hinterradgelenktes Flurförderzeug bei Geradeausfahrt und beim Durchfahren einer Kurve mit einem vorgegebenen Lenkwinkel. Die Sektoren IV stellen die Geradeausfahrt dar und Sektor II die stationäre Kurvenfahrt. Sektor I gibt das Einlenken in die Kurve an und Sektor III das Herauslenken aus der Kurve. Aus dem unteren Diagramm in Fig. 3 erkennt man, dass naturgemäß der Schräglaufwinkel während der Geradeausfahrt null ist. Während der stationären Kurvenfahrt nähert er sich einem Grenzwert α_{Grenz1.} Während des Übergangs von Geradeaus zur stationären Kurvenfahrt ergibt sich kurzzeitig ein negativer Schräglaufwinkel, und beim Herausfahren aus dem Sektor III ergibt sich ein größerer Schräglaufwinkel α_{Grenz2.}

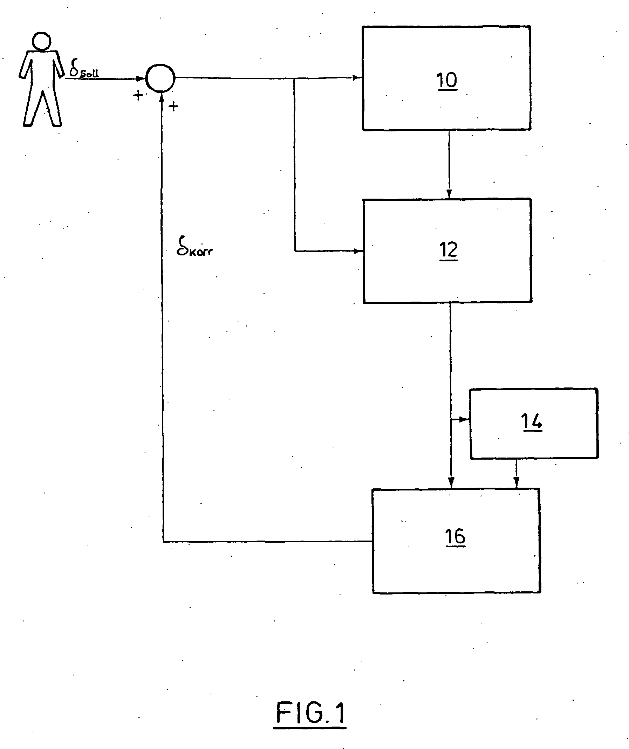

In Fig. 1 ist ein hinterradgelenktes Flurförderzeug mit 10 bezeichnet. Es weist übliche Sensoren (nicht gezeigt) für den Lenkwinkel und die Geschwindigkeit auf. Die Lenkung ist elektrisch oder elektrohydraulisch. Außerdem weist das Fahrzeug einen Giersensor auf, mit dessen Hilfe die Gierrate bestimmt werden kann. Die fahrzeugdynamischen Größen werden in eine sogenannte Beobachtersoftware 12 eingelesen. Diese bestimmt aus den genannten fahrdynamischen Größen den Schwimmwinkel. Dies geschieht dadurch, dass in der Beobachtersoftware ein mathematisches Modell des Fahrzeugs berechnet wird, aus dem der Schwimmwinkel mit gewissen Unsicherheiten hervorgeht.

Eine genaue Berechnung ist nicht möglich, allenfalls messtechnisch kann der Schwimmwinkel exakt ermittelt werden. Mit Hilfe des geschätzten Schwimmwinkels lässt sich im Block 14 der Schräglaufwinkel an den Hinterrädern errechnen. Im Block 16 erfolgt der Vergleich zwischen dem errechneten Schräglaufwinkel und einem situationsbedingten maximalen Wert für den Schräglaufwinkel oder dem zulässigen Höchstwert. Dieser maximale Wert ist vom Fahrzustand abhängig, welcher mindestens folgende Größen umfasst: Richtung der Lenkbetätigung (Einlenken oder Zurücklenken), die Fahrtrichtung, die Fahrgeschwindigkeit sowie optional auch weitere Fahrzustandsgrößen, wie Lenkwinkel, Hubhöhe oder Masse der transportierten Last. Die Fahrzustandsgrößen werden im Fahrzeug 10 gemessen und gelangen entweder unmittelbar oder durch Berechnung auf den Block 16 zur Bestimmung des fahrzustandsabhängigen Höchstwertes für den Schräglaufwinkel. Überschreitet der gemessene Schräglaufwinkel den jeweils vorgegebenen Höchstwert, folgt eine Korrektur des Lenkwinkels über den Pfad δ_{korr.} Vom Fahrer wird ein Lenkwinkel δ_{Soll} vorgegeben, der, falls nicht korrigiert, unmittelbar auf die Hinterräder des Fahrzeugs übertragen wird. Erfolgt hingegen eine Korrektur des eingegebenen Sollwertes δ_{Soll}, wird der Sollwert δ_{Soll} korrigiert zwecks Unterschreitens des jeweiligen Höchstwertes für den Schräglaufwinkel. Eine derartige Regelung findet fortlaufend statt, bis der Höchstwert unterschritten wird. Eine regelungstechnische Annäherung an den Höchstwert ist wünschenswert. Ein zu kleiner Schräglaufwinkel bei der Kurvenfahrt eines Fahrzeugs schöpft die technischen Möglichkeiten nicht aus und verringert die wirtschaftliche Nutzung.

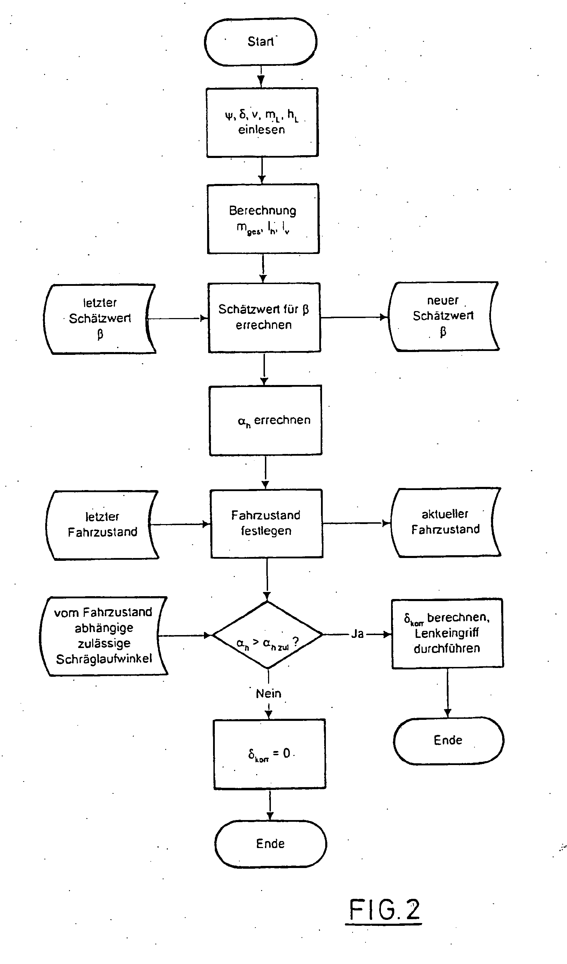

In Fig. 2 ist der Programmablauf wiedergegeben, wobei nach dem Start folgende Größen in die Software 12 eingelesen werden:
- αₕ:: Schräglaufwinkel an der Hinterachse
- β:: Schwimmwinkel
- δ:: Lenkwinkel
- δₖₒᵣᵣ:: zusätzlicher Lenkwinkel zur Kippvermeidung
- ψ:: Gierrate
- h_{L}:: Hubhöhe der aufgenommenen Last

Zusätzlich gehen ein die Gesamtmasse des Fahrzeugs mit Last sowie die Abstände Fahrzeugschwerpunkt-Hinterachse in der Fahrzeuglängsachse und Abstand Fahrzeugschwerpunkt-Vorderachse in der Fahrzeuglängsachse. In der bereits beschriebenen Art und Weise wird ein Schätzwert für den Schwimmwinkel β berechnet und gegebenenfalls mit dem letzten Schätzwert β verglichen. Der neue Schätzwert wird abgespeichert. Unter Umständen erfolgt eine Korrektur des Schätzwertes mit Hilfe des Vergleichs der tatsächlich gemessenen mit der errechneten Gierrate ψ. Mit Hilfe des Schwimmwinkels β wird der Schräglaufwinkel für die Hinterräder αₕ errechnet. Im übrigen wird der Fahrzustand festgelegt, der, wie schon erwähnt, eine Reihe von unterschiedlichen Größen beinhaltet, nämlich Richtung der Lenkbetätigung, Fahrtrichtung, Fahrgeschwindigkeit und Fahrzustandsgrößen wie Lenkwinkel, Hubhöhe und Masse der transportierten Last. Daraus ergibt sich der vom Fahrzustand abhängige zulässige Schräglaufwinkel an den Hinterrädern. Ist der errechnete Schräglaufwinkel größer als der zulässige Grenzwert, erfolgt mit δₖₒᵣᵣ ein Lenkeingriff. Ist der gemessene Schräglaufwinkel kleiner als der zulässige Höchstwert, erfolgt naturgemäß keine Korrektur.

## Patentansprüche

1. Verfahren zur Kippvermeidung von hinterradgelenkten Fahrzeugen, bei dem Schräglaufwinkel ermittelt werden, die mit zulässigen Schräglaufwinkeln verglichen werden zwecks Eingriff in eine Fahrzeuglenkung, wenn der Istwert des Schräglaufwinkels zum zulässigen Schräglaufwinkel eine vorgegebene Relation aufweist, **dadurch gekennzeichnet, dass** nur die Schräglaufwinkel an den gelenkten Hinterrädern des Fahrzeugs mit einem zulässigen Schräglaufwinkel-Höchstwert verglichen werden und der Lenkwinkel so geregelt wird, dass der Schräglaufwinkel unterhalb des zulässigen Höchstwertes liegt.

2. Verfahren nach Anspruch 1, **dadurch gekennzeichnet, dass** zur Bestimmung des aktuellen Schräglaufwinkels aus den gemessenen Größen Lenkwinkel, Gierrate und Fahrgeschwindigkeit der Schwimmwinkel ermittelt wird.

3. Verfahren nach Anspruch 2, **dadurch gekennzeichnet, dass** mit Hilfe einer Beobachtersoftware aus Lenkwinkel, Gierrate und Fahrgeschwindigkeit ein Modell des Fahrzeugs simuliert wird und nach Maßgaben gemessener Zustandsgrößen der aktuelle Schwimmwinkel geschätzt wird.

4. Verfahren nach Anspruch 3, **dadurch gekennzeichnet, dass** die zu dem geschätzten Schwimmwinkel gehörende Gierrate mit der tatsächlich gemessenen Gierrate verglichen wird und eine Lenkwinkelkorrektur unterbleibt oder der geschätzte Schwimmwinkel korrigiert wird, wenn die Abweichung einen vorgegebenen Wert erreicht.

5. Verfahren nach Anspruch 1, **dadurch gekennzeichnet, dass** der Schwimmwinkel messtechnisch erfasst wird, vorzugsweise mit einem optischen Sensor.

6. Verfahren nach einem der Ansprüche 1 bis 5, **dadurch gekennzeichnet, dass** die Fahrgeschwindigkeit reduziert wird, wenn der Schräglaufwinkel oberhalb eines zulässigen Wertes liegt.

7. Verfahren nach einem der Ansprüche 1 bis 6, **dadurch gekennzeichnet, dass** zur Bestimmung des maximal zulässigen Schräglaufwinkels die Lage des Fahrzeugschwerpunktes und/oder die Fahrzeugmasse bestimmt werden.

8. Verfahren nach Anspruch 7, **dadurch gekennzeichnet, dass** zur Bestimmung von Masse und Schwerpunktslage des Fahrzeugs die Auf standskräfte der Reifen oder der Einfederweg der Reifen oder der Radaufhängung gemessen werden.

9. Verfahren nach einem der Ansprüche 1 bis 8, **dadurch gekennzeichnet, dass** bei niedrigen Fahrgeschwindigkeiten unterhalb einer Mindestgeschwindigkeit eine Begrenzung des Schräglaufwinkels auf einen zulässigen Wert entfällt.

10. Verfahren nach einem der Ansprüche 1 bis 9, **dadurch gekennzeichnet, dass** der zulässige Lenkwinkel beim Einlenken in eine Kurve gesteuert wird derart, dass der im aktuellen Fahrzustand (Geschwindigkeit, Masse, Lage des Schwerpunktes) zu erwartende Schräglaufwinkel nicht größer als ein zulässiger Höchstwert wird und erst beim Herauslenken aus einer Kurve der Lenkwinkel geregelt begrenzt wird.

11. Verfahren nach Anspruch 10, **dadurch gekennzeichnet, dass** für das Einlenken in eine Kurve und für die stationäre Kurvenfahrt ein erster Grenzwert für den Schräglaufwinkel und für das Herauslenken aus einer Kurve ein größerer zweiter Grenzwert vorgesehen wird, wobei der zweite Grenzwert im Rahmen der Kippstabilität liegt.

## Claims

1. Method for the prevention of turnover of rear wheel steered vehicles, wherein the rear wheels are steered to attain desired steering angles driven with a desired speed in which method actual slip angles are determined which are compared with pre-set slip angles, in order to intervene in a vehicle steering when an actual slip angle is in a predetermined relation to the pre-set slip angle, in which method further only the slip angles of the steered rear wheels of the vehicle are determined and compared with a predetermined slip angle maximum value, and the steering angle being controlled such that the slip angle is below the predetermined maximum value.

2. The method according to claim 1, wherein for determining the actual slip angle, the sideslip angle is determined from measured values of steering angle, yawing rate and driving speed defining measured state variables.

3. The method according to claim 2, wherein a model of the vehicle is simulated from steering angle, yawing rate and driving speed with the aid of an observer software, and that the actual sideslip angle is estimated from the measured state variables.

4. The method according to claim 3, wherein the yawing rate associated with the estimated sideslip angle is compared with the actually measured yawing rate to define a deviation, and a steering angle correction is not performed or the estimated sideslip angle is corrected when the deviation reaches a predetermined value.

5. The method according to claim 1, **characterised in that** the sideslip angle is metrologically retrieved, preferably with an optical sensor.

6. The method according to any one of claims 1 to 5, wherein the driving speed is reduced when the sideslip angle is above a predetermined value.

7. The method according to any one of claims 1 to 6, wherein the vehicle has a centre of gravity and a mass and the position of the vehicle's centre of gravity and/or the vehicle's mass are/is detected for the determination of the maximum predetermined slip angle.

8. The method according to claim 7, wherein the vehicles has tyres on the wheels, the wheels being supported by a possibly resilient suspension, the tyres generate an actual force on the ground and wherein the vertical forces of the tyres or a bump travel of the tyres or of the wheel suspension are measured in order to determine the vehicle's mass and the position of the centre of gravity thereof.

9. The method according to any one of claims 1 to 8, wherein at low driving speeds below a minimum speed, restriction of the slip angle to a pre-set value is omitted.

10. The method according to any one of claims 1 to 9, wherein a desired steering angle is controlled when turning in into a curve, such that the slip angle which is to be expected in the actual driving condition (speed, mass, position of the centre of gravity) is not greater than a predetermined maximum value and the steering angle is restricted in a controlled way only when turning out from a curve.

11. The method according to claim 10, wherein a first limiting value for the slip angle is provided for turning in into a curve and for stationary curve driving, and a greater second limiting value is provided for turning out from a curve, the second limiting value being in the limits of a turnover stability.

## Revendications

1. Méthode pour prévenir le renversement de véhicules dirigés par la roue arrière, dans laquelle des angles de dérive sont déterminés, qui sont comparés à des angles de dérive admissibles dans le but d'une intervention dans un mécanisme de direction de véhicule, lorsque la valeur effective de l'angle de dérive présente une relation prédéterminée par rapport à l'angle de dérive admissible, **caractérisée en ce que** seulement les angles de dérive aux roues arrières dirigées du véhicule sont comparés à une valeur maximale d'angle de dérive admissible et l'angle de braquage est réglé de telle manière que l'angle de dérive se trouve au-dessous de la valeur maximale admissible.

2. Méthode selon la revendication 1, **caractérisée en ce que** pour la détermination de l'angle de dérive actuel, l'angle d'attitude est déterminé à partir des grandeurs mesurées d'angle de braquage, de taux de lacet et de vitesse de conduite.

3. Méthode selon la revendication 2, **caractérisée en ce que**, à l'aide d'un logiciel observateur, un modèle du véhicule est simulé à partir de l'angle de braquage, du taux de lacet et de la vitesse de conduite et l'angle d'attitude actuel est estimé conformément aux variables d'état.

4. Méthode selon la revendication 3, **caractérisée en ce que** le taux de lacet correspondant à l'angle d'attitude estimé est comparé au taux de lacet effectivement mesuré et une correction d'angle de braquage n'a pas lieu ou l'angle d'attitude estimé est corrigé, lorsque l'écart atteint une valeur prédéterminée.

5. Méthode selon la revendication 1, **caractérisée en ce que** l'angle d'attitude est détecté de manière métrologique, de préférence par un capteur optique.

6. Méthode selon l'une des revendications 1 à 5, **caractérisée en ce que** la vitesse de conduite est réduite lorsque l'angle de dérive est situé au-dessus d'une valeur admissible.

7. Méthode selon l'une des revendications 1 à 6, **caractérisée en ce que** pour la détermination de l'angle de dérive maximal admissible, la position du centre de gravité du véhicule et/ou la masse du véhicule sont déterminées.

8. Méthode selon la revendication 7, **caractérisée en ce que** pour la détermination de la masse et de la position du centre de gravité du véhicule, les forces de contact au sol des pneus ou la course de compression des pneus ou de la suspension sont mesurées.

9. Méthode selon l'une des revendications 1 à 8, **caractérisée en ce qu'**à des vitesses de conduite peu élevées au-dessous d'une vitesse minimale, une limitation de l'angle de dérive à une valeur admissible n'a pas lieu.

10. Méthode selon l'une des revendications 1 à 9, **caractérisée en ce que** l'angle de braquage admissible est commandé lors du guidage dans un virage de telle sorte que l'angle de dérive auquel il faut s'attendre dans l'état actuel de conduite (vitesse, masse, position du centre de gravité) ne devienne pas supérieur à une valeur maximale admissible et l'angle de braquage n'est limité par régulation que lors du guidage de sortie d'un virage.

11. Méthode selon la revendication 10, **caractérisée en ce que** pour le guidage dans un virage et pour la conduite en virage stationnaire, une première valeur limite pour l'angle de dérive et pour le guidage de sortie d'un virage, une seconde valeur limite plus élevée sont prévues, la seconde valeur limite étant comprise dans le cadre de la stabilité au renversement.
